# EUROPÄISCHE PATENTSCHRIFT

(11) **EP 2 097 201 B1**
(45) Veröffentlichungstag und Bekanntmachung des Hinweises auf die Patenterteilung: **24.02.2010**
(21) Anmeldenummer: 07801335.6
(22) Anmeldetag: 13.09.2007
(51) Int. Cl.: B23C 5/26, F16D 1/112

(54) **WERKZEUGKUPPLUNG**
TOOL COUPLING
ACCOUPLEMENT D'OUTIL

(30) Priorität: 20.10.2006 DE 102006050454
(43) Veröffentlichungstag der Anmeldung: 09.09.2009
(73) Patentinhaber: Kennametal Inc., Latrobe, PA 15650-0231 (US)
(72) Erfinder: HEINLOTH, Markus, 92353 Postbauer-Heng (DE); THURNWALD, Walter, 90547 Stein (DE)
(74) Vertreter: Vomberg, Friedhelm
(86) Internationale Anmeldenummer: PCT/DE2007/001650
(87) Internationale Veröffentlichungsnummer: WO 2008/046373

(56) Entgegenhaltungen:
- DE-A1- 10 231 382
- DE-C1- 3 438 978
- DE-U- 7 229 646

## Beschreibung

Die Erfindung betrifft eine Werkzeugkupplung zur Verbindung eines rotierend antreibbaren Werkzeugträgers, insbesondere eines Fräswerkzeuges, mit einer Maschinenspindel oder einen mit dieser Spindel verbundenen Adapter, wobei zur Drehmomentübertragung zwischen den genannten Teilen 4 kreuzweise angeordnete Mitnehmer vorgesehen sind, die im Spannzustand in 4 Ausnehmungen eingreifen.

Insbesondere beim Fräsen von Kurbelwellen ist schon aus betriebswirtschaftlichen Gründen ein schneller Werkzeugwechsel nach dem Verschleiß der Schneideinsätze erforderlich. Zum Kurbelwellenfräsen werden Außen- oder Innenfräser verwendet, bei denen auf einer Werkzeugscheibe bzw. Ringscheibe die einzelnen Schneideinsätze radial oder tangential an der äußeren Peripherie (beim Außenfräser) oder an der inneren Peripherie (beim Innenfräser) angeordnet sind. Die vorliegende Erfindung betrifft die Schnittstelle zwischen der Maschinenspindel oder einem mit der Maschinenspindel verbundenen Adapter zu einem innen verzahnten Fräswerkzeug bzw. Fräswerkzeugträger.

Bei den nach dem Stand der Technik bekannten Ausführungsformen (siehe z.B. DE 3 438 978) ist an der genannten Schnittstelle eine sogenannte Kreuzaufnahme vorgesehen, bei der 4 kreuzweise am Spindel- oder Adapterinnenmantel angeordnete Mitnehmersteine vorgesehen sind, mittels derer das Fräswerkzeug, das in entsprechender Weise angeordnete Nuten besitzt, zentriert werden kann. Gleichzeitig wird das Drehmoment von der Spindel bzw. von dem Adapter auf das Fräswerkzeug übertragen. Die Mitnehmersteine und die korrespondierenden Nuten sind in radialer Richtung angeordnet, so dass im Falle einer (unvermeidbaren) Werkzeugerwärmung während des Fräsens das Fräswerkzeug sich ungehindert ausdehnen kann. Nachteiliger Weise ist wegen des vorzusehenden geringen Passungsspieles zwischen den Mitnehmern und den Nuten der Ein- und Ausbau des Werkzeuges zuweilen schwierig. Schon ein geringes Verkanten des Fräswerkzeuges bzw. Werkzeugträgers kann zum Klemmen führen. Die Verklemmung zwischen der Maschinenspindel und dem Werkzeug lässt sich oftmals nur mit erheblichem und zeitaufwendigem Aufwand lösen, zum Teil unter Einsatz von Abdrückschrauben oder ähnlichem.

Die früher im Querschnitt rechtwinklig ausgebildeten Nuten sind daher zur Vermeidung des vorgenannten Nachteils keilförmig ausgebildet worden. Die keilförmige Mitnehmerausbildung kann sowohl in axialer Richtung (ähnlich einer Hirth-Verzahnung) als auch radial angeordnet sein. Die keilartige Ausbildung der Mitnehmer (in Verbindung mit einer korrespondierenden Ausbildung der Nuten) bringt zwar eine Verbesserung gegen das Verklemmen, ist jedoch kostenaufwendig.

Es ist Aufgabe der vorliegenden Erfindung eine Werkzeugkupplung zu schaffen, die eine leichte Bedienbarkeit ermöglicht, einfach aufgebaut ist und einem unerwünschten Verklemmen entgegenwirkt und kostengünstig herstellbar ist.

Zur Lösung dieser Aufgabe wird die Werkzeugkupplung nach Anspruch 1 vorgeschlagen, die dadurch gekennzeichnet ist, dass die Mitnehmer jeweils auf der das Drehmoment übertragenden Seite eine ebene Fläche aufweisen, die vollflächig im Spannzustand an einer Wand einer nutförmigen Ausnehmung anliegt, dass auf der gegenüberliegenden Seite der Mitnehmer zur dortigen Wand der nutförmigen Ausnehmung eine kleinere formschlüssige oder reibschlüssige Anlagefläche besitzt und dass zum axialen Verspannen des Werkzeugträgers und der Spindel oder eines Adapters eine Schnellspanneinrichtung vorgesehen ist.

Der Grundgedanke der vorliegenden Erfindung geht davon aus, dass lediglich auf der drehmomentübertragenden Seite eine größtmögliche flächige Anlage gegeben sein muss, wohingegen auf der dieser abgewandten Seite geringe Anlageflächen zur entsprechenden Positionierung der beiden Werkzeugteile zueinander erforderlich sind. Die bisher verwendeten Verbindungsstellen der Mitnehmer, die nach dem Feder-Nutprinzip arbeiten, waren so ausgelegt, dass jeweils alle Mitnehmerschultern gleich groß sind. Eine derart hohe Schulter in Folge der Flächenpressung ist jedoch nur an der drehmomentübertragenden Seite der Nut-Federverbindung notwendig. Auf der gegenüberliegenden Seite reicht hingegen eine Fixierung des Werkzeugträgers mit der Spindel. Diese Fixierung kann entweder form- oder kraftschlüssig ausgelegt werden, jedenfalls haben betreffende Mittel zur Fixierung eine kleinere Anlagefläche. Zum axialen Verspannen des Werkzeugträgers und der Spindel ist eine Schnellspanneinrichtung vorgesehen. Mit der vorbeschriebenen Anordnung lässt sich ein Verkanten bzw. Verklemmen wirksam vermeiden. Der Mitnehmer sowie das diametral gegenüberliegende auskragende Mittel kann sowohl spindelseitig als auch werkzeuträgerseitig angeordnet sein, entsprechendes gilt für die korrespondierend ausgebildete Nut. Bereits existierende Werkzeugkupplungen lassen sich ohne großen Aufwand umrüsten, indem die Mitnehmer entsprechend abgeändert werden.

Vorzugsweise werden als formschlüssig ineinandergreifende Mittel ein federbelasteter Körper, vorzugsweise eine federbelastete Kugel und eine Nut- oder muldeförmige Ausnehmung vorgesehen. Das federnd belastete Kugeldruckstück übernimmt die Aufgabe der Fixierung an der der Drehmomentübertragung abgewandten Seite, wobei die betreffende Verbindung als Rastverbindung ausgebildet sein kann. Ein solches Einschnappen der federbelasteten Kugel in der vorgesehenen Ausnehmung ist deutlich hörbar und erleichtert die Kontrolle der Primärfixierung. Die federbelasteten Körper können entweder spindel- als auch werkzeugseitig angeordnet sein.

Alternativ hierzu kann der Mitnehmer auf der der Drehmomentübertragung abgewandten Seite zumindest teilweise keilförmig ausgebildet sein, vorzugsweise mit einem Keilwinkel von 10°, so dass sich im Extremfall dort eine nahezu linienförmige Abstützung des Mitnehmers in der Nut ergibt.

Zur endgültigen axialen Befestigung des Werkzeugträgers (Fräswerkzeugs) an der Spindel oder einem Adapter wird eine Schnellspanneinrichtung verwendet, insbesondere mit drehbar angeordneten Spannpratzen, die vorzugsweise als Exenterspannkörper ausgebildet sind.

Die vorbeschriebene Verbindung ermöglicht ein zeitsparendes Ein- und Ausbauen des Fräswerkzeugs ohne großen Aufwand, da die Schnellspanneinrichtung Teil der Maschinenspindel ist.

Weitere Ausführungsbeispiele und Vorteile der Erfindung sind den Zeichnungen dargestellt. Es zeigen
- Fig. 1 und 5: jeweils teilkreisförmige Ausschnitte einer teilgeschnittenen Quer- schnittsansicht der Verbindung eines Fräswerkzeuges mit einem Adapter,
- Fig. 2: eine Detailvergrößerung des Ausschnittes B aus Fig. 1,
- Fig. 3 und 4: jeweils Schnittansichten entlang der Linien C - C und D - D,
- Fig. 6: eine Detailansicht gemäß Schnittlinie A - A in Fig. 5 und
- Fig. 7: eine Detailansicht des Ausschnittes E in Fig. 6.

Die vorliegenden Abbildungen zeigen einen mit einer Maschinenspindel verbundenen Adapter 10 sowie einen Fräserkörper 11, die mittels 4 kreuzweise angeordneten Mitnehmern 12 oder 13 und einer Schnellspanneinrichtung 14 bzw. 14' miteinander verbunden sind.

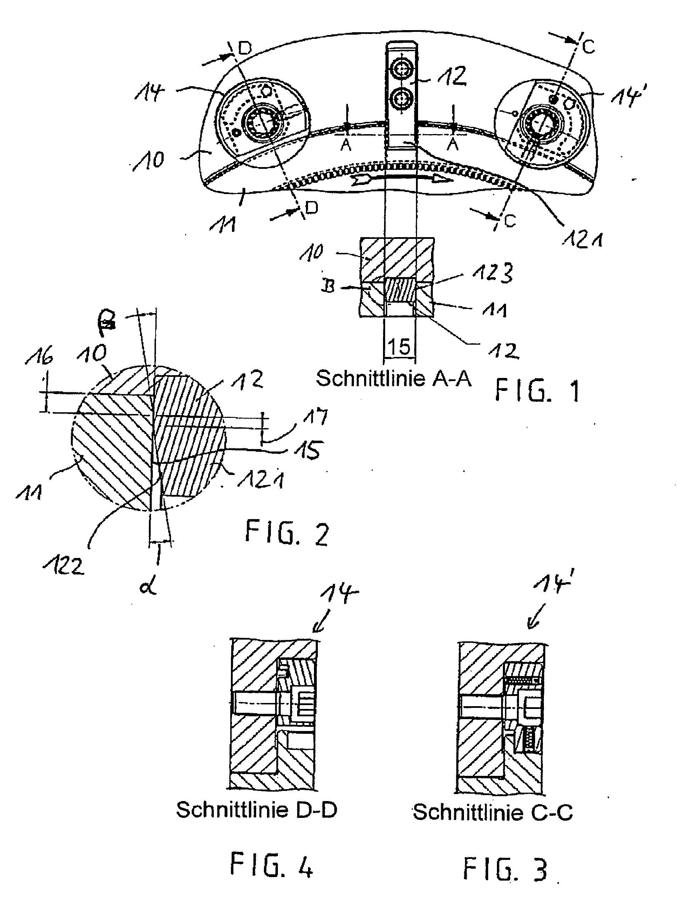

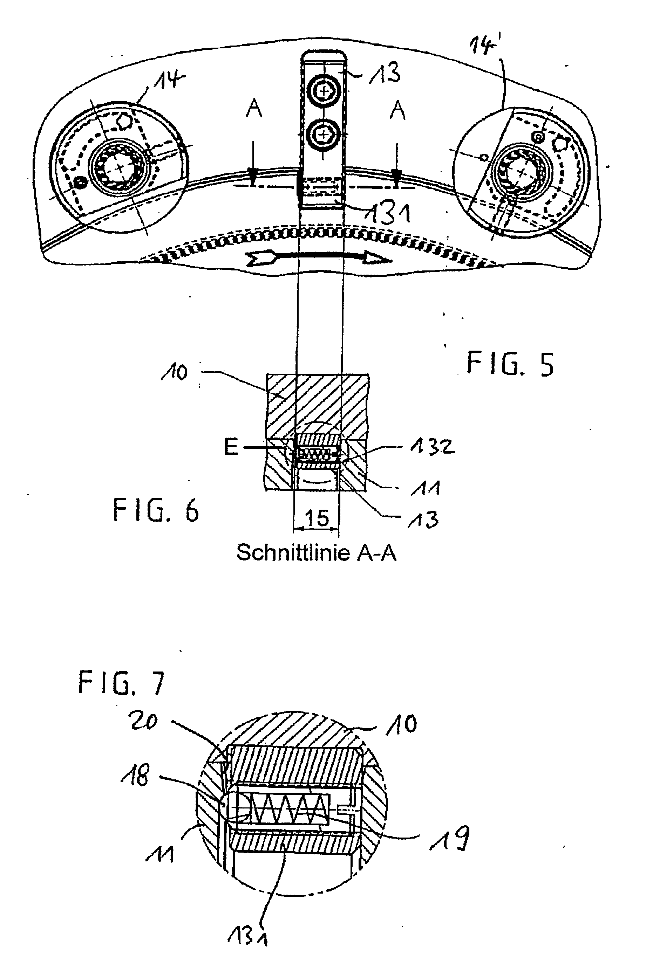

Wie Fig. 1 und 5 zeigen, sind die Mitnehmer 12 und 13, die im vorliegenden Fall in den Adapter 10 montiert sind, derart ausgebildet, dass deren drehmomentübertragende Seite 123 bzw. 132 eben ausgebildet ist und mit der gesamten Fläche an einer Wand einer Nut anliegt. Auf der gegenüberliegenden Seite ist der Mitnehmer 12 an seinem auskragenden Ende 121 keilförmig ausgebildet, wobei die Keilfläche zusammen mit der Nutwand 15 in dem Fräswerkzeug 11 einen Keilwinkel α bildet, der vorzugsweise 10° beträgt. Die Schlupffase 16, die vorzugsweise unter einem Fasenwinkel β von 10° am oberen Nutrand ausgebildet ist, führt dazu, dass der Mitnehmer 12 auf dieser Seite lediglich über eine schmale Anlagefläche 17 an der Nutwand reibschlüssig anliegt.

Eine Alternative in Form einer formschlüssigen Anlage zeigen Fig. 5 bis 7 mit einem Mitnehmer, der zur Drehmomentübertragung vom Adapter 10 bzw. einer Maschinenspindel auf den Fräserkörper 11 eine große ebene Anlagefläche 132 und auf der gegenüberliegenden abgewandten Seite einen federbelasteten Körper 18, nämlich eine Kugel, auf die eine Feder 19 einwirkt, aufweist. Der auskragende Teil 131 dient auf dieser Seite lediglich dazu, eine Vorpositionierung zu finden, bei der die Kugel 18 in eine entsprechende Nut bzw. Mulde des Fräserkörpers 11 einrastet. Am oberen Nutrand ist, ähnlich wie in Fig. 2 dargestellt, eine unter einem geringen Winkel von z. B. 10° geneigte Fase 20 vorgesehen.

In axialer Richtung wird das Werkzeug über eine Schnellspanneinrichtung 14 fixiert, deren Spannpratze in Fig. 4 in der geöffneten Stellung und Fig. 3 in der Klemmstellung dargestellt ist. Die Spannpratze ist exzentrisch ausgebildet und kann durch 90°-Drehung als Schnellspannkörper ausgebildet sein.

## Patentansprüche

1. Werkzeugkupplung zur Verbindung eines rotierend antreibbaren Werkzeugträgers, insbesondere eines Fräswerkzeuges (11) mit einer Maschinenspindel oder einem mit einer Spindel verbundenen Adapter (10), wobei zur Drehmomentübertragung zwischen den genannten Teilen 4 kreuzweise angeordnete Mitnehmer vorgesehen sind, die im Spannzustand in 4 Ausnehmungen eingreifen,
**dadurch gekennzeichnet, dass**
die Mitnehmer jeweils auf der das Drehmoment übertragenden Seite eine ebene Fläche aufweisen, die vollflächig im Spannzustand an einer Wand einer nutförmigen Ausnehmung anliegt, dass auf der gegenüberliegenden Seite der Mitnehmer zur dortigen Wand der nutförmigen Ausnehmung eine kleinere formschlüssige oder reibschlüssige Anlage besitzt und dass zum axialen Verspannen des Werkzeugträgers (11) und der Spindel oder eines Adapters (10) eine Schnellspanneinrichtung (14, 14') vorgesehen ist.

2. Werkzeugkupplung nach Anspruch 1, **dadurch gekennzeichnet, dass** die formschlüssige Anlage durch einen federbelasteten Körper (18), vorzugsweise eine federbelastete Kugel in einer nut- oder muldenförmige Ausnehmung realisiert ist.

3. Werkzeugkupplung nach Anspruch 1 oder 2, **dadurch gekennzeichnet, dass** der Mitnehmer (12) auf der Seite, die der drehmomentübertragenden Seite abgewandt ist, mindestens teilweise keilförmig ausgebildet ist, vorzugsweise mit einem Keilwinkel (α) zwischen 5° und 45°.

4. Werkzeugkupplung nach Anspruch 3, **dadurch gekennzeichnet, dass** die Nut im oberen Bereich eine Fase, vorzugsweise unter einem Winkel zwischen 5° und 45°, hierunter eine kurze Anlagefläche, vorzugsweise mit einer Höhe von 1 mm ± 0,3 mm, und hierunter eine Abschrägung, vorzugsweise unter einem Keilwinkel zwischen 5° und 45° aufweist.

5. Werkzeugkupplung nach einem der Ansprüche 1 bis 4, **dadurch gekennzeichnet, dass** die Schnellspanneinrichtung (14, 14') eine drehbar angeordnete Spannpratze besitzt, die vorzugsweise als Exzenterspannkörper ausgebildet ist.

## Claims

1. Tool coupling for connecting a rotationally drivable tool carrier, in particular a milling tool (11), to a machine spindle or an adapter (10) connected to a spindle, wherein four drivers arranged crosswise being provided for transmitting torque between said parts, said drivers engaging in four recesses in the clamped state, **characterised in that** the drivers each have, on the side transmitting the torque, a planar surface which is in contact over the full surface area with a wall of a slot-shaped recess in the clamped state, that, on the opposite side, the driver has a smaller positive-locking or frictional contact with respect to the wall there of the slot-shaped recess, and that a quick-clamping device (14, 14') is provided for axially clamping the tool carrier (11) and the spindle or an adapter (10).

2. Tool coupling according to claim 1, **characterised in that** the positive-locking contact is realized by a spring-loaded body (18), preferably a spring-loaded ball, in a slot- or trough-shaped recess.

3. Tool coupling according to claim 1 or 2, **characterised in that** the driver (12), on the side which is remote from the torque-transmitting side, is at least partly of wedge-shaped design, preferably with a wedge angle (α) between 5° and 45°.

4. Tool coupling according to claim 3, **characterised in that** the slot has, in the top region, a bevel, preferably at an angle of between 5° and 45°, a short contact surface therebelow, preferably with a height of 1 mm ± 0.3 mm, and a slope therebelow, preferably at a wedge angle of between 5° and 45°.

5. Tool coupling according to one of claims 1 to 4, **characterised in that** the quick-clamping device (14, 14') has a rotatably arranged clamping shoe which is preferably designed as an eccentric clamping body.

## Revendications

1. Accouplement d'outil pour relier un porte-outil entraînable en rotation, en particulier un outil de fraisage (11), à une broche de machine ou à un adaptateur (10) relié à une broche, pour la transmission du couple entre lesdits éléments étant prévus quatre entraîneurs disposés en croix qui, en état serré, s'engagent dans quatre évidements, **caractérisé par le fait que** lesdits entraîneurs présentent chacun, du côté transmettant le couple, une face plane qui, en état serré, s'applique sur toute la surface contre une paroi d'un évidement en forme de rainure, que, du côté opposé, l'entraîneur présente un appui plus petit à engagement positif ou par friction par rapport à la paroi y située de l'évidement en forme de rainure, et qu'un dispositif de serrage rapide (14, 14') est prévu pour le serrage axial du porte-outil (11) et de la broche ou d'un adaptateur (10).

2. Accouplement d'outil selon la revendication 1, **caractérisé par le fait que** l'appui à engagement positif est réalisé par un corps chargé par ressort (18), de préférence par une bille chargée par ressort, dans un évidement en forme de rainure ou de creux.

3. Accouplement d'outil selon la revendication 1 ou 2, **caractérisé par le fait que**, du côté qui montre dans la direction opposée au côté transmettant le couple, ledit entraîneur (12) est réalisé de manière à être au moins en partie cunéiforme, de préférence avec un angle de coin (α) compris entre 5° et 45°.

4. Accouplement d'outil selon la revendication 3, **caractérisé par le fait que** la rainure présente, dans la zone supérieure, un chanfrein, de préférence à un angle compris entre 5° et 45°, là-dessous une courte surface d'appui, de préférence avec une hauteur de 1 mm ± 0,3 mm, et là-dessous un biseau, de préférence à angle de coin compris entre 5° et 45°.

5. Accouplement d'outil selon l'une quelconque des revendications 1 à 4, **caractérisé par le fait que** ledit dispositif de serrage rapide (14, 14') possède une griffe de serrage disposée de façon rotative qui est réalisée de préférence en tant que corps excentrique de serrage.
